# EUROPÄISCHE PATENTANMELDUNG

(11) **EP 2 460 981 A1**
(43) Veröffentlichungstag der Anmeldung: **06.06.2012**
(21) Anmeldenummer: 11188652.9
(22) Anmeldetag: 10.11.2011
(51) Int. Cl.: F01D 11/12, C23C 4/02

(54) **Wärmedämmende Auskleidung für eine Fluggasturbine**

(30) Priorität: 01.12.2010 DE 102010060944
(71) Anmelder: BBAT Berlin Brandenburg Aerospace Technology AG, 15745 Wildau (DE)
(72) Erfinder: Albrecht, Dipl.-Ing., Günter, 85232 Bergkirchen (DE)
(74) Vertreter: Specht, Volker

(57) **Zusammenfassung**

Eine wärmedämmende Auskleidung für eine Turbomaschine umfasst eine auf einer mit einer Unterlage verbundenen Haftschicht (17) angebrachte keramische Wärmedämmschicht (19), die in einer durch Lasercusing oder Lasersintern aufgebauten, als Waffelmusterstruktur mit zwischen Hinterschneidungen aufweisenden Stegen (20) eingeschlossenen Hohlräumen ausgebildeten, dreidimensionalen metallischen Zwischenschicht (18) formschlüssig verankert ist. Die so ausgebildete Zwischenschicht wirkt als Armierungs- und Verankerungselement für die keramische Wärmedämmschicht, so dass die Gefahr der Beschädigung oder des Ablösens der Wärmedämmschicht minimiert und deren Lebensdauer erhöht wird.

## Beschreibung

Die Erfindung betrifft eine wärmedämmende Auskleidung für eine Turbomaschine, die eine auf einer mit einer Unterlage verbundenen Haftschicht angebrachte keramische Wärmedämmschicht umfasst, insbesondere für die einen Laufschaufelkranz einer Fluggasturbine umgebenden Ringsegmente.

Wärmedämmende Auskleidungen dienen bekanntermaßen der Leistungssteigerung von thermischen Turbomaschinen. Bei einem Gasturbinentriebwerk können derartige Wärmedämmschichten an den den Laufschaufelkranz umgebenden Ringsegmenten der Hochdruck-, Mitteldruck- oder Niederdruckturbine und an mit den Turbinenleitschaufeln integral verbundenen Ringsegmenten, aber auch im Bereich des Verdichters oder der Brennkammer vorgesehen sein. In Labyrinthdichtungen fungiert die wärmedämmende Auskleidung in Kombination mit einer Einlaufschicht zudem als Dichtelement.

Eine aus der DE 3018620 C2 bekannte wärmedämmende und dichtende Auskleidung umfasst einen mittels thermischem Spritzen aufgebrachten Mehrschichtverbundkörper, dessen Wärmedämmschicht als Zwischenschicht zwischen einer an der Gehäusewand angebrachten metallischen Haftschicht und einer als Einlaufbelag ausgebildeten porösen Deckschicht eingebettet ist. Während aus einer Haftschicht, einer Wärmedämmschicht und einer Einlaufschicht bestehende Auskleidungen vorwiegend bei Hochdruckverdichtern vorgesehen sind, sind die an den Ringsegmenten der Hochdruckturbinen von Flugtriebwerken angebrachten Auskleidungen zumeist ohne Einlaufschicht ausgebildet. Die bekannten wärmedämmenden Auskleidungen, die eine auf eine Haftschicht aufgespritzte keramische Wärmedämmschicht und gegebenenfalls auch eine Einlaufschicht umfassen, sind insofern nachteilig, als der feste Verbund der Wärmedämmschicht mit der Unterlage nicht gewährleistet ist und sich während des Betriebs Teile der Wärmedämmschicht von der Haftschicht lösen können, so dass die Lebensdauer der mit der Wärmedämmschicht versehenen Bauteile gering ist und eine kosten- und arbeitsaufwendige Reparatur erforderlich ist.

Der Erfindung liegt daher die Aufgabe zugrunde, die wärmedämmende Auskleidung von Turbomaschinen, insbesondere die mit oder ohne Einlaufschicht ausgeführte Wärmedämmschicht auf den Ringsegmenten eines Gasturbinentriebwerks so auszubilden, dass deren feste Verbindung mit der Unterlage und deren lange Lebensdauer gewährleistet sind.

Erfindungsgemäß wird die Aufgabe mit einer wärmedämmenden Auskleidung gemäß den Merkmalen des Patentanspruchs 1 gelöst.

Vorteilhafte Weiterbildungen und zweckmäßige Ausgestaltungen der Erfindung sind Gegenstand der Unteransprüche.

Der Grundgedanke der Erfindung besteht in der Ausbildung einer auf der mit der metallischen Haftschicht verbundenen Unterlage (beispielsweise einem Ringsegment) durch Lasercusing oder Lasersintern aufgebauten, als Waffelmusterstruktur mit zwischen Stegen eingeschlossenen Hohlräumen ausgebildeten, dreidimensionalen metallischen Zwischenschicht, in und auf welche die keramische Wärmedämmschicht bis auf eine die freien Enden der Stege überschreitende Ebene ein- bzw. aufgespritzt ist, wobei in den Stegen beidseitig Hinterschneidungen ausgebildet sind und die Wärmedämmschicht in den von den Stegen umschlossenen Hohlräumen formschlüssig verankert ist. Die auf der Basis der Lasercusing- oder Lasersinterverfahrens so ausgebildete Zwischenschicht wirkt als Armierungs- und Verankerungselement für die keramische Wärmedämmschicht. Die Gefahr der Beschädigung oder des Ablösens der Wärmedämmschicht wird minimiert und deren Lebensdauer wird erhöht.

Gemäß einem weiteren Merkmal der Erfindung werden die Hinterschneidungen in den Stegen durch einen von einer Stegwand symmetrisch ausgehenden Stegkopf mit einer die Dicke der Stegwand überschreitenden Dicke gebildet.

In vorteilhafter Weiterbildung der Erfindung ist der Stegkopf so ausgebildet, dass dessen Querschnittsfläche ausgehend von der Stegwand zunächst allmählich breiter und dann bis zu einem Spitzenbereich allmählich wieder kleiner wird. Die Querschnittfläche des Stegkopfes kann etwa die Form einer Raute oder eines Kreises oder eines Tropfens oder einer Ellipse haben.

In Ausgestaltung der Erfindung sind an der Außenkontur der Stege gerundete Übergänge vorgesehen, so dass die von den Stegen umschlossenen Hohlräume mit Hinterschneidungen vollständig mit der Wärmedämmschicht ausgefüllt werden können.

In weiterer Ausgestaltung der Erfindung können auch zwei oder mehrere Stege zur Ausbildung tieferer Hohlräume mit zwei oder mehr übereinander angeordneten Hinterschneidungen einstückig übereinander angeordnet sein, so dass eine noch bessere Verankerung der Wärmedämmschicht möglich ist.

Gemäß einem noch anderen Merkmal der Erfindung sind zur Kühlung der Wärmedämmschicht in die Stege mit einem Kühlmedium beaufschlagbare, während des Lasercusing- oder Lasersinterverfahrens erzeugte Kühlkanäle eingeformt.

Die von den Stegen gebildeten Hohlräume der Waffelmusterstruktur haben vorzugsweise eine rautenförmige oder quadratische oder rechteckige oder dreieckige oder vieleckige Querschnittsfläche.

In dem über den Stegen liegenden Teil der keramischen Wärmedämmschicht können sich feine, in Richtung des Spitzenbereichs der Stege verlaufende Oberflächenrisse ausbilden, durch die die Flexibilität und Stabilität der Wärmedämmschicht erhöht wird.

In weiterer Ausgestaltung der Erfindung ist zur gleichzeitigen Ausbildung einer wärmedämmenden und dichtenden Auskleidung oberhalb der Wärmedämmschicht eine Einlaufschicht vorgesehen.

Die metallische Haftschicht, auf der die Zwischenschicht aufgebaut ist, wird üblicherweise separat auf die Unterlage aufgespritzt. Zur Vereinfachung des Verfahrens und zur Kostenverringerung kann die metallische Haftschicht durch Lasercusing oder Lasersintern erzeugt werden und ist integraler Bestandteil der Zwischenschicht.

Ein Ausführungsbeispiel der Erfindung wird anhand der Zeichnung, in der
- Fig. 1: eine Prinzipdarstellung einer als Flugtriebwerk dienenden Turbomaschine;
- Fig. 2: eine schematische Darstellung eines Teils der Hochdruckturbine eines Gasturbinentriebwerks mit am Triebwerksgehäuse angebrachten und mit einer wärmedämmenden Auskleidung versehenen Ringsegmenten;

- Fig. 3: eine detaillierte, stark vergrößerte Schnittdarstellung einer an der Innenfläche eines Ringsegments vorgesehenen, aus einer Haftschicht, einer Zwischenschicht und einer Wärmedämmschicht bestehenden wärmedämmenden Auskleidung;
- Fig. 4: eine Schnittansicht einer mit einer Einlaufschicht versehenen wärmedämmenden Auskleidung, bei der die Haftschicht integraler Bestandteil der Zwischenschicht ist; und
- Fig. 5: eine stark vergrößerte Draufsicht auf eine als quadratische Waffelmusterstruktur ausgebildeten Zwischenschicht,
zeigt, näher erläutert.

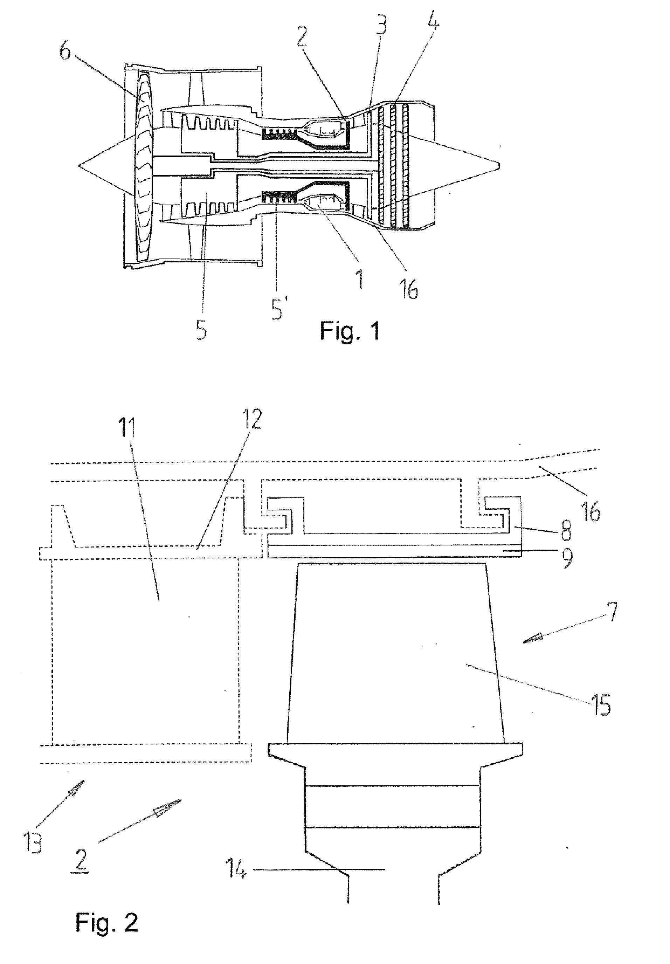

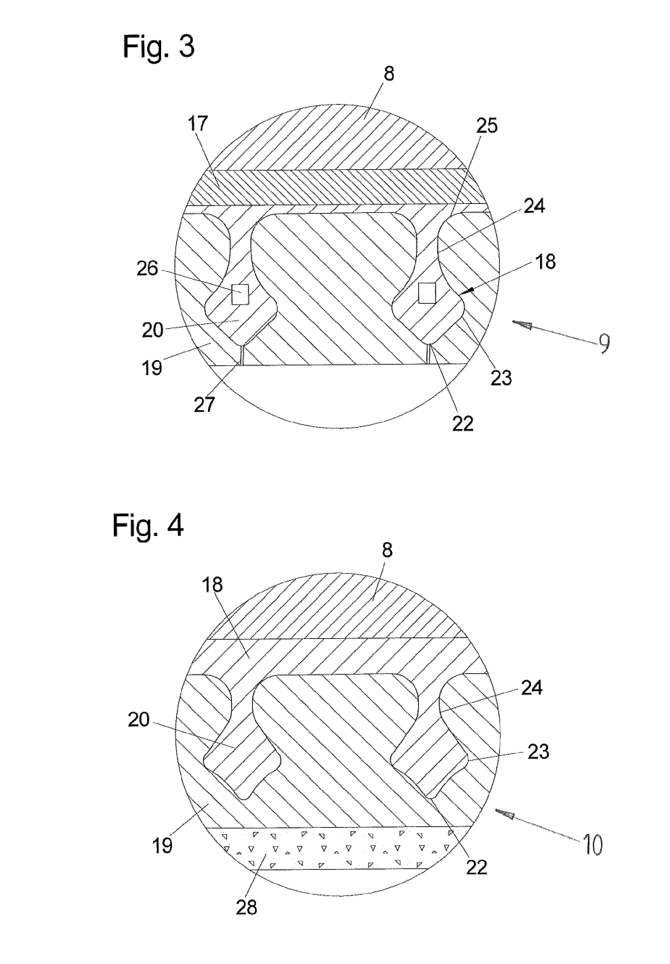

Das in Fig. 1 beispielhaft dargestellte Drei-Wellen-Turbofan-Triebwerk umfasst - angeordnet stromab einer Brennkammer 1 - eine Hochdruckturbine 2, eine Mitteldruckturbine 3 und eine Niederdruckturbine 4, die jeweils mit einer Welle zum Antrieb von zwei Verdichtern 5, 5' und dem Fan 6 verbunden sind. Die Laufschaufelkränze 7 der Turbinen 2 bis 4 sind von Ringsegmenten 8 (Fig. 2) umgeben, die an ihren den Schaufelspitzen zugewandten Innenflächen mit einer wärmedämmenden Auskleidung 9 oder einer wärmedämmenden und abdichtenden Auskleidung 10 (Fig. 4) zur gleichzeitigen Ausbildung einer Labyrinthdichtung versehen sind. Eine wärmedämmende Auskleidung 9 kann auch an den mit den Leitschaufeln 11 der Turbinen 2 bis 4 verbundenen Ringsegmenten 12 und im Bereich der Verdichter und der Brennkammer angebracht sein.

Die in Fig. 2 schematisch dargestellte einstufige Hochdruckturbine 2 eines Gasturbinentriebwerks umfasst einen Leitschaufelkranz 13, bestehend aus mit den Ringsegmenten 12 verbundenen Leitschaufeln 11, und einen stromab angeordneten, von Ringsegmenten 8 umgebenen Laufschaufelkranz 7 mit an einer Laufscheibe 14 befestigten Laufschaufeln 15. Die am Triebwerksgehäuse 16 gehaltenen Ringsegmente 8 weisen an ihrer den Laufschaufeln 15 zugewandten Innenfläche eine wärmedämmende Auskleidung 9 auf, die, wie Fig. 3 zeigt, aus einer auf die Ringsegmente 8 aufgespritzten metallischen Haftschicht 17 (beispielsweise aus MCrAlY), einer durch Lasercusing oder Lasersintern erzeugten dreidimensionalen metallischen Zwischenschicht 18 aus dem gleichen Werkstoff wie das Ringsegment 8 (beispielsweise eine Nickelbasislegierung) und einer aus Zirkonoxid bestehenden, auf bzw. in die Zwischenschicht 18 gespritzten und in dieser formschlüssig verankerten keramischen Wärmedämmschicht 19 besteht.

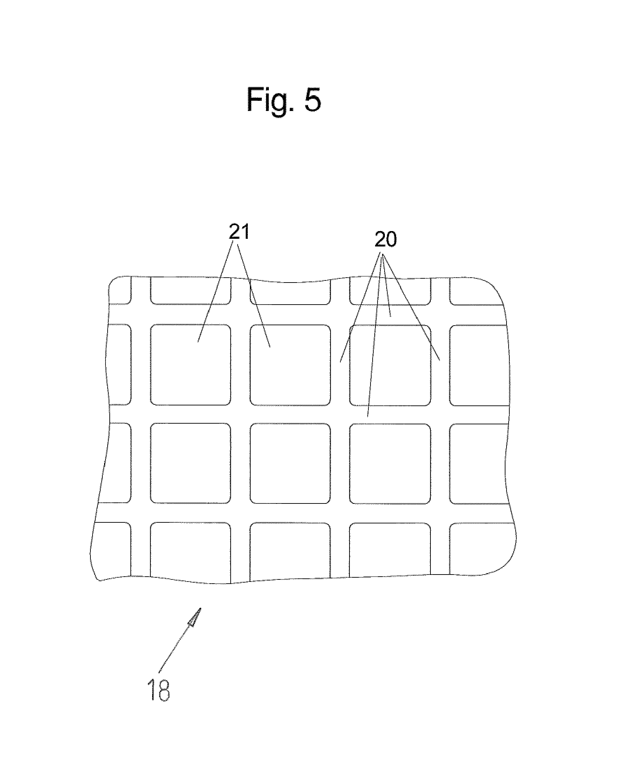

Die Zwischenschicht 18 bildet, wie aus Fig. 5 ersichtlich, ein aus miteinander verbundenen Stegen 20 erzeugtes, eine Vielzahl aneinandergereihter quadratischer Hohlräume 21 darstellendes Waffelmuster. Die Stege 20 der Zwischenschicht 18 können auch ein Muster aus Rechtecken, Sechsecken, Dreiecken, Rauten oder dgl. bilden. Die Stege 20 der Zwischenschicht 18 haben eine im Querschnitt etwa pilzartige Form, bestehend aus einer schmalen Stegwand 24, deren Stegfuß 25 zur Haftschicht 17 hin gerundet ausläuft, und einem sich ausgehend von der Stegwand 24 allmählich (im Wesentlichen konisch) erweiternden Stegkopf 23, der sich zum freien Ende hin wieder (hier konisch) verjüngt und einen mittig angeordneten Spitzenbereich 22 bildet. Die schmale Stegwand 24 bildet mit dem sich allmählich erweiternden Stegkopf 23 eine Hinterschneidung. In der hier als quadratisches Waffelmuster mit hinterschnittenen Stegen 20 geformten Zwischenschicht 18 ist die aufgespritzte keramische Wärmedämmschicht 19 fest verankert, wobei die Stege 20 auch als Armierung für das Wärmedämmmaterial dienen. Aufgrund des sich zum Spitzenbereich 22 hin verjüngenden Stegkopfes 23 weist die keramische Wärmedämmschicht 19 über den Stegköpfen eine sich allmählich verringernde Dicke auf und ist dadurch sowie durch in diesem Bereich geringer Dicke erzeugte schmale Oberflächenrisse 27 relativ flexibel. Durch die feste Verankerung und die gleichzeitige Flexibilität der Wärmedämmschicht 19 an deren Oberfläche wird die Gefahr des Ablösens der Wärmedämmschicht von den Ringsegmenten verringert, so dass deren lange Lebensdauer gewährleistet ist. Bei der in Fig. 3 gezeigten Ausführungsform der wärmedämmenden Auskleidung 9 sind in den Stegen 20 der Zwischenschicht 18 Kühlkanäle 26 ausgebildet, um mit einem durch diese geleiteten Kühlmedium eine Kühlung der wärmedämmenden Auskleidung 9 zu bewirken.

Zur Erzeugung der dreidimensionalen Zwischenschicht 18 wird ein gemäß Fig. 3 auf die Haftschicht 17 oder gemäß Fig. 4 unmittelbar auf das als Unterlage fungierende Ringsegment 8 aufgebrachtes Metallpulverbett unter Verwendung von dreidimensionalen CAD-Daten mittels eines Lasers partiell schichtweise aufgeschmolzen. Mit diesem - als Lasercusing bekannten - Verfahren ist es möglich, die komplizierte dreidimensionale Struktur der metallischen Zwischenschicht herzustellen.

Fig. 4 zeigt eine wärmedämmende und darüber hinaus auch abdichtende Auskleidung 10. In diesem Fall befindet sich auf der Wärmedämmschicht 19 noch eine poröse Einlaufschicht 28, um mit den Schaufelspitzen oder an einem Deckband vorgesehenen Dichtstegen (nicht dargestellt) einen engen Dichtspalt bzw. eine Labyrinthdichtung ausbilden zu können. In der Ausführungsform gemäß Fig. 4 ist die Zwischenschicht 18 durch Lasercusing oder Lasersintern unmittelbar, das heißt ohne vorheriges Aufspritzen einer Haftschicht, auf der Innenfläche des Ringsegments 8 aufgebaut und auf die Erzeugung der Kühlkanäle wurde hier verzichtet. Eine derartige Ausbildung der Zwischenschicht 18 ist selbstverständlich auch bei der wärmedämmenden Auskleidung 9 gemäß Fig. 3 denkbar. Aufgrund des unmittelbaren Aufbringens der Zwischenschicht 18 auf den Ringsegmenten 8 kann der Fertigungsaufwand für die wärmedämmende Auskleidung 9 oder eine wärmedämmende und dichtende Auskleidung 10 verringert werden.

Die Erfindung ist nicht auf die zuvor anhand der Figuren 3 bis 5 erläuterten Ausführungsformen mit etwa rautenförmigem Stegkopf 23 beschränkt. Beispielsweise sind auch andere Querschnittsformen der Stege 20 denkbar. In jedem Fall muss aber zwischen Stegwand und Stegkopf ein Hinterschneidungsbereich erzeugt werden, der beim Einspritzen der Wärmedammschicht 19 gut ausgefüllt werden kann und deren sichere formschlüssige Verankerung gewährleistet. Das heißt, der Stegkopf kann beispielsweise auch eine annähernd kreis-, ellipsen- oder tropfenförmige Querschnittsfläche aufweisen.

### Bezugszeichenliste

- 1: Brennkammer
- 2: Hochdruckturbine
- 3: Mitteldruckturbine
- 4: Niederdruckturbine
- 5, 5': Verdichter
- 6: Fan
- 7: Laufschaufelkranz
- 8: Ringsegment
- 9: wärmedämmende Auskleidung
- 10: wärmedämmende und dichtende Auskleidung
- 11: Leitschaufel
- 12: Ringsegment von 13
- 13: Leitschaufelkranz
- 14: Laufscheibe
- 15: Laufschaufel
- 16: Triebwerksgehäuse
- 17: metallische Haftschicht
- 18: metallische Zwischenschicht, Waffelmuster
- 19: keramische Wärmedämmschicht
- 20: Stege von 18
- 21: Hohlraum von 18
- 22: Spitzenbereich von 20
- 23: Stegkopf von 20
- 24: Stegwand von 20
- 25: Stegfuß von 20
- 26: Kühlkanäle in 20
- 27: Oberflächenrisse in 19
- 28: Einlaufschicht von 10

## Patentansprüche

1. Wärmedämmende Auskleidung für eine Turbomaschine, die eine auf einer mit einer Unterlage verbundenen Haftschicht (17) angebrachte keramische Wärmedämmschicht (19) umfasst, insbesondere für die einen Laufschaufelkranz (7) einer Fluggasturbine umgebenden Ringsegmente (8), **gekennzeichnet durch** eine auf der metallischen Haftschicht (17) **durch** Lasercusing oder Lasersintern aufgebaute, als Waffelmusterstruktur mit zwischen Stegen (20) eingeschlossenen Hohlräumen (21) ausgebildete, dreidimensionale metallische Zwischenschicht (18), auf die die keramische Wärmedämmschicht (19) bis auf eine die freien Enden der Stege überschreitende Ebene aufgespritzt ist, wobei in den Stegen (20) beidseitig Hinterschneidungen ausgebildet sind und die Wärmedämmschicht (19) in den von den Stegen (20) umschlossenen Hohlräumen (21) formschlüssig verankert ist.

2. Wärmedämmende Auskleidung nach Anspruch 1, **dadurch gekennzeichnet, dass** die Hinterschneidungen in den Stegen (20) durch einen von einer Stegwand (24) ausgehenden Stegkopf (23) mit einer die Dicke der Stegwand überschreitenden Dicke gebildet ist.

3. Wärmedämmende Auskleidung nach Anspruch 2, **dadurch gekennzeichnet, dass** die Querschnittsfläche des Stegkopfes (23) ausgehend von der Stegwand (24) zunächst allmählich breiter und dann bis zu einem Spitzenbereich (22) allmählich wieder kleiner wird.

4. Wärmedämmende Auskleidung nach einem der Ansprüche 1 bis 3, **dadurch gekennzeichnet, dass** die Querschnittfläche des Stegkopfes (23) etwa die Form einer Raute oder eines Kreises oder eines Tropfens oder einer Ellipse hat.

5. Wärmedämmende Auskleidung nach einem der Ansprüche 1 bis 4, **gekennzeichnet durch** gerundete Übergänge in der Außenkontur der Stege (20), so dass die von den Stegen umschlossenen Hohlräume (21) mit Hinterschneidungen vollständig mit der Wärmedämmschicht (19) ausgefüllt sind.

6. Wärmedämmende Auskleidung nach einem der Ansprüche 1 bis 4, **dadurch gekennzeichnet, dass** zwei oder mehrere Stege (20) zur Ausbildung tieferer Hohlräume (21) mit zwei oder mehr übereinander angeordneten Hinterschneidungen einstückig übereinander angeordnet sind.

7. Wärmedämmende Auskleidung nach Anspruch 1, **dadurch gekennzeichnet, dass** zur Kühlung der Wärmedämmschicht in die Stege (20) mit einem Kühlmedium beaufschlagbare, während des Lasercusing- oder Lasersinterverfahrens erzeugte Kühlkanäle (26) eingeformt sind.

8. Wärmedämmende Auskleidung nach Anspruch 1, **dadurch gekennzeichnet, dass** die von den Stegen (20) gebildeten Hohlräume (21) der Waffelmusterstruktur eine rautenförmige oder quadratische oder rechteckige oder dreieckige oder vieleckige Querschnittsfläche haben.

9. Wärmedämmende Auskleidung nach Anspruch 1, **dadurch gekennzeichnet, dass** in dem über den Stegen (20) liegenden Teil der keramischen Wärmedämmschicht (19) zur Erhöhung der Flexibilität feine, in Richtung des Spitzenbereichs (22) verlaufende Oberflächenrisse (27) ausgebildet sind.

10. Wärmedämmende Auskleidung nach Anspruch 1, **dadurch gekennzeichnet, dass** zur gleichzeitigen Ausbildung einer wärmedämmenden und dichtenden Auskleidung (10) oberhalb der Wärmedämmschicht eine Einlaufschicht (28) vorgesehen ist.

11. Wärmedämmende Auskleidung nach Anspruch 1, **dadurch gekennzeichnet, dass** die metallische Haftschicht (17) separat auf die Unterlage aufgespritzt ist.

12. Wärmedämmende Auskleidung nach Anspruch 1, **dadurch gekennzeichnet, dass** die metallische Haftschicht durch Lasercusing oder Lasersintern erzeugt ist und integraler Bestandteil der Zwischenschicht (18) ist.
